# EUROPEAN PATENT SPECIFICATION

(11) **EP 2 499 920 B1**
(45) Date of publication and mention of the grant of the patent: **10.10.2018**
(21) Application number: 10828348.2
(22) Date of filing: 05.11.2010
(51) Int. Cl.: A23F 3/16, A23F 3/18

(54) **TEA BEVERAGE CONTAINING AMINO ACID AT HIGH CONCENTRATION**
TEEGETRÄNK MIT EINER HOCHKONZENTRIERTEN AMINOSÄURE
BOISSON À BASE DE THÉ CONTENANT UN ACIDE AMINÉ À CONCENTRATION ÉLEVÉE

(30) Priority: 09.11.2009 JP 2009256456
(43) Date of publication of application: 19.09.2012
(73) Proprietor: Suntory Holdings Limited, Kita-ku, Osaka-shi Osaka 530-8203 (JP)
(72) Inventor: TERAZAWA, Noriko, Kawasaki-shi Kanagawa 211-0067 (JP); MAKI, Hideki, Kawasaki-shi Kanagawa 211-0067 (JP)
(74) Representative: Vossius & Partner Patentanwälte Rechtsanwälte mbB
(86) International application number: PCT/JP2010/069709
(87) International publication number: WO 2011/055789

(56) References cited:
- WO-A2-2006/012238
- WO-A2-2007/109802
- JP-A- 2006 061 125
- JP-A- 2007 167 003
- JP-A- 2008 113 569
- JP-A- 2008 148 604
- JP-A- 2008 178 395
- JP-A- 2008 178 396
- Anonymous: "GNPD - Light Ice Tea Peach", , 1 June 2006 (2006-06-01), XP055370686, Retrieved from the Internet: URL:http://www.gnpd.com/sinatra/recordpage /550749/from_search/iKcS1PGuLW/?page=1 [retrieved on 2017-05-09]

## Description

### TECHNICAL FIELD

The present invention relates to a tea beverage containing amino acids at high concentrations and more specifically to a packaged tea beverage containing amino acids at high concentrations, which exhibits reduced heat-deterioration odor and good flavor.

### BACKGROUND ART

In recent years, many packaged tea beverages which are packed in containers such as cans and PET bottles have been developed and sold commercially, and the market for tea beverages, particularly green tea beverages, has been growing. Since tea beverages, particularly green tea beverages, have aroma and flavor that are subject to change, there is a demand to develop a process for producing a green tea beverage that is superior in color tone, flavor and shelf life, and there is also an important task of preventing heat-deterioration odor called retort odor which is generated by heat sterilization.

Known techniques for reducing the generation of unusual odor due to heat treatment include a technique for preventing heat-deterioration odor by taking the components of the heat-deterioration odor into an additive molecule, and a technique for removing in advance the components that cause unusual odor (heat-deterioration odor). Such techniques are specifically exemplified by a process for removing retort odor by adding cyclodextrin to a green tea extract (Patent Document 1, Non-patent Document 1), and a process for producing a tea beverage comprising: subjecting tea leaves to extraction with cold water at not more than 20°C to obtain a cold-water extract, removing the resultant extract, and then subjecting the residual tea leaves again to extraction with hot water at 30-95°C (Patent Document 2).

Meanwhile, there is a disclosure that furaneol, which is widely used as a flavoring compound having a fine fruit-like flavor, serves as a fragrance reinforcer for the flowery odor specific to jasmine tea if it is added to a tea beverage (Patent Document 3). Further, furaneol is known to act as a sweetness intensifier (Patent Document 4), and it is also disclosed that furaneol is capable of imparting the natural sweetness inherent in high-grade tea leaves if it is added to a tea beverage (Patent Document 5). Furthermore, it is disclosed that addition of furaneol to a non-tea-based beverage containing catechins at high concentrations reduces bitterness and astringency derived from the non-polymeric catechins (Patent Document 6). Furthermore a ready to drink iced tea beverage comprising black tea, peach juice and additional caffeine was available on the market (Non-Patent Document 2).

### CITATION LIST

### PATENT DOCUMENTS

Patent Document 1: JP Hei 01-174328 A
Patent Document 2: JP Hei 11-113491 A
Patent Document 3: JP 2006-206915 A
Patent Document 4: JP Sho 40-140659 A
Patent Document 5: JP 2007-167003 A
Patent Document 6: JP 2008-295370 A

### NON-PATENT DOCUMENT

Non-patent Document 1: Nippon Nogeikagaku Kaishi, Vol. 63 (1), pp. 29-35 (1989)
Non-patent Document 2: Light ice tea peach, from Hermann Pfanner Getränke, Austria, details retrievable from URL:http://www.gnpd.com/ sinatra/recordpage/550749/from_search/iKcS1PGuLW/?page=1

### SUMMARY OF INVENTION

### TECHNICAL PROBLEM

It has been traditionally appreciated that the stronger the taste of amino acids that are leached from tea leaves as in the case of gyokuro (refined green tea), the better quality the tea has or the more effectively it has been extracted, so it is often said that green tea with excellent flavor is a tea having low catechins content and strong umami (savory taste). Under these circumstances, also in the case of packaged tea beverages, sophisticated customer tastes arouse a demand to develop a tea beverage which exhibits strong umami and kokumi (rich body) as well as reduced astringency and bitterness, like the tea brewed in a teapot using so-called high-grade tea leaves having high amino acids content. However, in packaged tea beverages with high amino acids content, peculiar heat-deterioration odor develops due to heat sterilization in the production process, and additional problems arise during subsequent long-term storage, i.e., the heat-deterioration odor is enhanced to reduce palatability and discoloration occurs. Nevertheless, conventional techniques for reducing the generation of unusual odor due to heat treatment have not displayed sufficiently satisfactory effects on tea beverages having high amino acids content, nor have they been industrially advantageous approaches for such beverages.

An object of the present invention is to provide an easy-to-drink packaged tea beverage by reducing in a simple way the heat-deterioration odor specific to tea beverages containing amino acids at high concentrations.

### SOLUTION TO PROBLEM

The present invention is defined by the claims. The present inventors studied the effects on heat-deterioration odor of various flavor components incorporated into a tea beverage containing amino acids at high concentrations, and consequently found that furaneol has a specific action of reducing heat-deterioration odor of the tea beverage containing amino acids at high concentrations. As a result of further studies, the inventors also found that the presence of caffeine at a specified amount or higher enhances furaneol's action of reducing heat-deterioration odor, making it possible to reduce the amount of furaneol having a fruit-like flavor, or in other words to reduce only unpleasant heat-deterioration odor while hardly affecting the aroma and flavor inherent in tea, and thus the inventors have completed the present invention.

More specifically, the present invention relates to the following.
1. A packaged tea beverage produced through heat sterilization, containing:
   (a) at least 40 ppm of amino acids,
   (b) at least 150 ppm of caffeine, and
   (c) at least 50 ppb of furaneol.
2. The tea beverage according to 1, further containing (d) pyrazines, wherein the proportion of the furaneol to the pyrazines ((c)/(d)) is at least 2.0.
3. The tea beverage according to 1 or 2, wherein catechins are contained at not more than 600 ppm.
4. The tea beverage according to any one of 1 to 3, wherein the furaneol and/or the pyrazines are/is added as an extract from tea leaves.
5. A process for reducing heat-deterioration odor of a packaged tea beverage containing at least 40 ppm of amino acids and produced through heat sterilization, comprising adjusting the caffeine content in the beverage to at least 150 ppm and the furaneol content in the beverage to at least 50 ppb before the heat sterilization of the beverage.

### ADVANTAGEOUS EFFECTS OF INVENTION

The present invention can reduce heat-deterioration odor generated by heat sterilization without affecting the aroma or flavor inherent in tea beverages (in particular, green tea beverages) containing amino acids at high concentrations, and therefore can provide a packaged tea beverage that tastes like high-grade tea brewed in a teapot and exhibits satisfactory flavor stability during long-term storage.

The present invention offers another advantage that if furaneol, which is an active component for reducing heat-deterioration odor according to the present invention, is added in the form of an extract from tea leaves, a tea beverage can be produced in a simple way using only tea-derived components, without the use of flavoring agents or additives (except an antioxidant).

### DESCRIPTION OF EMBODIMENTS

### (Furaneol)

Furaneol, which is an active component for the inventive tea beverage, is known as a trade name for 2,5-dimethyl-4-hydroxy-3(2H)-furanone (4-hydroxy-2,5-dimethyl-3(2H)-furanone) manufactured by Firmenich, and is an aromatic compound represented by the following formula (1):

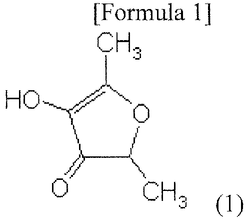

It is generally understood that furaneol is useful in a pineapple flavor, a strawberry flavor, a raspberry flavor, or a sugar-type flavor, and that the concentration of furaneol used in the end product is about 5.0-10.0 ppm ("Gosei Koryo, Kagaku to Shohin Chishiki" (Synthetic Perfumes, Chemistry and Commodity Knowledge), authored by Genichi Indo, published by Kagaku Kogyo Nipposha, 2005).

In the present invention, heat-deterioration odor in a tea beverage containing amino acids at high concentrations can be reduced by incorporating a specific amount of furaneol. As furaneol is added in larger amounts, it reduces heat-deterioration odor more effectively, but the fruit-like flavor of furaneol is likely to impair the aroma and flavor inherent in green beverages. The inventive tea beverage is characterized in that caffeine as incorporated in a specific amount synergistically enhances the action of furaneol and makes it possible to reduce heat-deterioration odor in the tea beverage containing amino acids at high concentrations using furaneol at extremely low concentrations, namely at concentrations that do not affect the aroma or flavor inherent in the tea beverage. The caffeine content that can enhance the action of a low concentration of furaneol is at least 150 ppm, and preferably at least 200 ppm, based on the total amount of the tea beverage, and the maximum caffeine content is generally about 500 ppm, preferably about 450 ppm, and more preferably about 400 ppm.

In the present invention, furaneol is present in the end product (heat-sterilized tea beverage) at about 50-200 ppb and preferably about 50-100 ppb. As furaneol, a commercial product, a synthetic product, or an extract from a natural substance may be used. Preparation processes for these products are disclosed in, for example, Swiss Patent No. 474500. In the case of using a synthetic furaneol or a furaneol isolated and purified from a natural substance, it may be added as it is to a tea beverage, but it is preferably used in the form of a flavoring composition formulated by mixing it with a solid carrier like dextrin or dissolving it into an edible solvent (such as ethanol) commonly used in beverages and foods.

Further, from the viewpoint of aroma, tea-leaf-derived furaneol is preferably used as the furaneol of the present invention, and it is especially preferably added in the form of a tea leaf extract. It has been reported that there is an explicit correlation between high-grade tea leaves and the furaneol content (refer to Table 1 in Patent Document 5). As the inventive furaneol in the form of an extract from tea leaves, a liquid extract obtained by eliminating or reducing components that cause unusual odor (heat-deterioration odor) from high-grade tea leaves can be used (for example, an extract from a second or later infusion after low-temperature extraction; refer to Patent Document 2), but an extract obtained by fractionating a furaneol-rich component from tea leaves by steam distillation or the like is preferably used. Exemplary steam distillation conditions are: atmospheric pressure and a space velocity (SV) of 20-100 (1/h).

### (Pyrazines)

In the inventive tea beverage, heat-deterioration odor can be reduced effectively by further incorporating pyrazines. Known pyrazines include methylpyrazine, 2,5-dimethylpyrazine, 2,6-dimethylpyrazine, ethylpyrazine, 2,3-dimethylpyrazine, ethylmethylpyrazine, and 3-ethyl-2,5-dimethylpyrazine. Pyrazines are components generally obtained by extraction from the roasts of tea stems and leaves from the genus Camellia (including C. sinensis, C. assamica, Yabukita, and their hybrids). In the present specification, among the above-noted components, 2,5-dimethylpyrazine and 2,6-dimethylpyrazine are put together and collectively referred to as pyrazines (d).

In the inventive tea beverage, the proportion of furaneol and pyrazines ((c)/(d)) can be adjusted by incorporating an extract from the roasted tea stems or leaves containing pyrazines (d) and a tea extract or the like containing furaneol (c) at specified amounts based on the total amount of the tea beverage. The presence of pyrazines in large amounts may develop bitterness and scorching odor, but adjusting the proportion ((c)/(d)) within the above-noted range achieves the additive or synergistic effect of furaneol and pyrazines in reducing heat-deterioration odor. The proportion of furaneol and pyrazines ((c)/(d)) is preferably at least 2.0, more preferably at least 5.0, and still more preferably at least 11.0.

### (Tea beverage containing amino acids)

The inventive tea beverage contains amino acids at high concentrations of at least 40 ppm (preferably at least 45 ppm, more preferably at least 50 ppm, especially preferably at least 55 ppm). As used herein, "amino acids" is a generic name for 19 amino acids: arginine, lysine, histidine, phenylalanine, tyrosine, leucine, isoleucine, methionine, valine, alanine, glycine, proline, glutamic acid, serine, threonine, asparatic acid, tryptophan, cystine and theanine, and the content of amino acids in the tea beverage is defined based on the total amount of the above-listed 19 amino acids. In the present specification, the content of amino acids in the tea beverage is conveniently determined by determining the amount of amino nitrogen in the tea beverage. The specific determination method will be described later in the Examples section.

Tea beverages containing amino acids at high concentrations of at least 40 ppm have the problem that they develop a marked heat-deterioration odor (also referred to as retort odor or potato odor) which degrades their quality after heat sterilization. According to the present invention, further incorporating furaneol and caffeine at specified amounts provides a tea beverage that exhibits reduced heat-deterioration odor and a taste reminiscent of the high-grade tea brewed in a teapot. In other words, the inventive tea beverage is a packaged tea beverage produced through heat sterilization, containing: (a) at least 40 ppm of amino acids, (b) at least 150 ppm of caffeine, and (c) at least 50 ppb of furaneol.

Here, the caffeine may be a synthetic product or natural substance. However, in order to attain one of the effects of the present invention, namely the capability of achieving the aroma and flavor of high-grade tea in the form of packaged tea beverage without the use of any additives other than tea-derived components, the content of tea-derived caffeine is preferably adjusted to be within the above-noted range. The method for adjusting the caffeine content is exemplified by addition of a tea leaf extract or its concentrate, the tea leaf extract which is obtained by subjecting caffeine-rich tea leaves as the raw material to extraction at high temperatures (at least 70°C, preferably at least 75°C, more preferably at least 80°C, and especially preferably at least 85°C).

Another important factor that determines the flavor of a tea beverage is catechins. Although, in some cases, being effective for masking heat-deterioration odor, the bitterness and astringency of catechins are unfit for achieving the tea beverage flavor intended in the present invention, more specifically strong umami and kokumi as well as reduced astringency and bitterness which are reminiscent of high-grade tea. In order to impart the aroma and flavor intended in the present invention, the content of catechins in the inventive tea beverage is preferably adjusted to not more than 600 ppm, and preferably not more than 500 ppm. The catechins content can be adjusted as appropriate by varying the amount of the solvent (water) used, temperature, time, and the like in the extraction step from tea leaves, but catechins can also be removed selectively by known methods such as the use of resin adsorbents or activated charcoal. As used herein, "catechins" is a generic name that includes catechin, epicatechin, gallocatechin, epigallocatechin, catechin gallate, epicatechin gallate, gallocatechin gallate, and epigallocatechin gallate, and the catechins content is defined based on the total amount of the above-listed 8 catechins.

The inventive tea beverage containing (a) at least 40 ppm of amino acids, (b) at least 150 ppm of caffeine, and (c) at least 50 ppb of furaneol (and preferably not more than 600 ppm of catechins) may typically be produced in the following manner. First, a tea extract that serves as the base of a tea beverage is prepared. As the raw material tea leaves, tea leaves with high amino acids content, or so-called high-grade tea leaves, are preferably used, and gyokuro, kabusecha (dark grown tea), and tencha (sweet tea) are specifically mentioned. Extraction using water in an amount 5-500 times, preferably 5-100 times, the amount of the raw material tea leaves (at a temperature of 20-60°C, preferably 40-60°C) yields a tea-leaf extract with high amino acids content and low catechins content. The extraction time, though varying with the temperature and amount of the extraction solvent (water) and the degree of stirring, is generally 30 seconds to 30 minutes, and preferably 1-10 minutes. The extraction is followed by separation of the tea leaves by a known method. It should be noted that an antioxidant such as L-ascorbic acid and/or a pH adjuster such as sodium hydrogencarbonate may be added during extraction.

The base tea extract is loaded with the above-described furaneol, and diluted to an appropriate concentration; thereafter the caffeine content and/or the catechins content are/is optionally adjusted to make a preparation for the inventive tea beverage. If the amino acids content in the base tea extract is less than 40 ppm, a tea extract containing amino acids at high concentrations is added such that amino acids will be present at an appropriate concentration. The tea extract containing amino acids at high concentrations may be exemplified by the tea extract disclosed in International Publication No. WO 2009/041555.

The tea beverage preparation may be loaded with an antioxidant such as L-ascorbic acid and/or a pH adjuster such as sodium hydrogencarbonate. In order that tea beverages, in particular green tea beverages, have a mellow and mild aroma and flavor, pH is desirably set high, but in fact it cannot be set very high in consideration of problems with microorganisms and heat-deterioration odor, so packaged green tea beverages generally have a pH of about 6.0 to 6.4. In contrast, the inventive tea beverage is expected to benefit from the antimicrobial activity of furaneol, so the pH can be set to more than 6.4; this is another feature of the present invention. Accordingly, the pH of the preparation is preferably adjusted such that the pH of the heat-sterilized tea beverage will be 6.4 to 7.0.

A packaged tea beverage can be produced by sterilizing the preparation and then packing it in a container or, alternatively, by packing the preparation in a container and then performing heat-sterilization (such as retort-sterilization). As used herein, "heat-sterilization" refers to the sterilization of the preparation by heating it at 110°C or higher, and includes retort sterilization and UHT sterilization. For example, in the case of producing a canned beverage, a specified amount of the preparation is packed in a container and is then retort-sterilized (e.g. at 110-140°C for one minute to tens of minutes). In the case of producing a beverage packed in a PET bottle, carton, cup, or glass bottle, the preparation is, for example, UHT-sterilized at 120-150°C for one second to tens of seconds and then a specified amount of the sterilized preparation is hot filled or aseptically cold filled in a container.

Any common containers such as aluminum can, steel can, PET bottle, glass bottle, carton, and cup can be used for packing the inventive tea beverage.

### EXAMPLES

The present invention will now be specifically described in detail by way of Examples, which are by no means intended to limit the present invention.

The contents of furaneol, pyrazines, catechins, caffeine, and amino acids in the inventive tea beverage are determined by the following methods.

### Furaneol and pyrazines

TDU-GC/MS manufactured by Agilent Technologies was used for analysis. The GERSTEL twister was used for extraction and concentration of aroma components. After 1.5 g of sodium chloride was dissolved into 5 g of a sample, extraction was performed by stirring in the twister for one hour. Quantification was achieved by the standard addition method. As standard reagents, 2,5-dimethyl-4-hydroxy-3(2H)-furanone and 2,5-dimethyl pyrazine, both manufactured by Tokyo Chemical Industry Co., Ltd., were used. The analysis conditions were as follows.
Gas chromatograph: Agilent Technologies 7890A GC System
Detector: Agilent Technologies 5975C inert XL MSD
Column: HP-INNOWAX 10 M, 0.2 mm, 0.2 µm
Carrier gas: helium, 1 mL/min
Temperature conditions: 60°C (0.5 min) => (24°C/min) => 260°C (2 min)

### Catechins and caffeine

A tea beverage sample was filtrated though a filter (0.45 µm) and subjected to HPLC analysis. The HPLC analysis conditions were as follows.
Analyzer: Tosoh Corporation, TOSOH HPLC System LC8020 model II [multistation: LC-8020; pump: CCMC-II; autosampler: AS-8021; detector: UV-8020; column oven: CO-8020; online degasser: SD-8023]
Analysis conditions: [column: TSK gel ODS-80Ts QA; eluant A: 10% acetonitrile/water, 0.05% TFA; eluant B: 80% acetonitrile/water, 0.05% TFA; flow rate: 1.0 mL/min; temperature: 40°C; detection: UV 275 nm]

### Amino acids

Amino acids were analyzed by determining amino nitrogen in the beverage. Amino nitrogen was determined by the TNBS (trinitrobenzenesulfonic acid) method. First, a tea beverage sample was mixed with a phosphate buffer solution and a 0.1% aqueous solution of 2,4,6-trinitrobenzenesulfonic acid-sodium salt, and after reaction was performed at 45°C for 90 minutes, fluorescence intensity (OD 340 nm) was determined. A calibration curve was generated using a glycine standard solution, and the amino nitrogen content in the sample was calculated as a glycine equivalent.

### Example 1 Furaneol-loaded tea beverage (1)

Ichibancha-kabusecha (first-picked dark grown tea) tea leaves with high amino acids content were used as the raw material tea leaves, and water 25 times the dry weight of the tea leaves was used as an extraction solvent. After extraction with hot water at 55°C for 7 minutes, the tea leaves were separated, and centrifugation was further performed to remove solid contents such as coarse ground tea tissues and particles, whereby the extract A was obtained.

The extract A was diluted to give an amino acids content of 75 ppm (Comparative Example 1). The diluted product was loaded with furaneol (purity: at least 95%) such that the furaneol concentration was as indicated in Table 1. The mixture was further loaded with L-ascorbic acid and sodium hydrogencarbonate, the pH was adjusted to 6.7, and then sterilization was performed at 125°C for 7 minutes. Thus, the inventive green tea beverage was produced (Inventive Products 1-3).

The obtained green tea beverage was analyzed to determine the contents of furaneol, pyrazines, amino acids, caffeine and catechins, and was subjected to sensory evaluation. In the sensory evaluation, umami, clear sensation, and heat-deterioration odor were rated by 5 specialized panelists on a 6-point scale (5: significantly strongly sensed, 4: strongly sensed, 3: sensed, 2: somewhat sensed, 1: slightly sensed, 0: not sensed), and the averages of their scores were calculated.

The results are summarized in Table 1. As can be seen from Table 1, the tea beverage containing 40 ppb of furaneol (Comparative Example 1) exhibited more intense heat-deterioration odor (retort odor), while the tea beverages containing at least 50 ppb of furaneol (Inventive Products 1-3) exhibited reduced heat-deterioration odor, rich umami, and mellow aroma and flavor.

**[Table 1]**

| | | | | | | | Sensory evaluation | | |
|---|---|---|---|---|---|---|---|---|---|
| | (a) Amino acids (ppm) | (b) Caffeine (ppm) | (c) Furaneol (ppb) | (d) Pyrazines (ppb) | (c)/(d) | Catechins | Umami | Clear sensation | Heat-deterioration odor |
| Inventive Product 1 | 75 | 350 | 50 | 4 | 12.5 | 550 | 5.0 | 2.8 | 1.8 |
| Inventive Product 2 | 75 | 350 | 100 | 4 | 25.0 | 550 | 4.8 | 2.8 | 1.6 |
| Inventive Product 3 | 75 | 350 | 200 | 4 | 50.0 | 550 | 4.8 | 2.7 | 2.0 |
| Comparative Example 1 | 75 | 350 | 40 | 4 | 10.0 | 550 | 4.8 | 2.6 | 4.2 |

### Example 2 Furaneol-loaded tea beverage (2)

The tea extract A obtained in Example 1 was diluted to give an amino acids content of 40 ppm, and was loaded with furaneol as in Example 1 such that the furaneol concentration was as indicated in Table 2 (Comparative Example 3). The resultant product was further loaded with furaneol as in Example 1 such that the furaneol concentration was as indicated in Table 2. The mixture was further loaded with L-ascorbic acid and sodium hydrogencarbonate, the pH was adjusted to 6.7, and then sterilization was performed at 125°C for 7 minutes. Thus, the inventive green tea beverage was produced (Inventive Product 4).

Further, in order to provide Comparative Example 2, the extract A obtained in Example 1 was diluted to give an amino acids content of 20 ppm, and a tea extract containing amino acids was added to make adjustments such that the mixture had the formulation indicated in Table 2, whereby a tea beverage was produced. More specifically, green tea leaves (weakly roasted) were sealed in a column extractor, and water (25°C) was passed through the extractor to thereby obtain a low-temperature extract (a). Next, hot water (75°C) was passed through the residue remaining after the first extraction to thereby obtain a high-temperature extract (b). The residue remaining after the second extraction was subjected to enzyme (protease and pectinase) treatments to obtain an enzyme reaction solution (c). All amounts of said (a) and (c) were mixed to obtain a tea extract containing amino acids (Brix 0.8). The tea extract was mixed with the extract A of Example 1 that had been diluted to give an amino acids content of 20 ppm. Thus, the tea beverage was produced as Comparative Example 2 in Table 2.

Furthermore, in order to provide Comparative Example 4, extraction was performed using strongly roasted tea leaves (ichiban-kabusecha) as in the case of the extract A to thereby obtain an extract. The extract was diluted to give an amino acids content of 40 ppm, whereby a tea beverage was produced.

Comparative Examples 2-4 were also subjected to pH adjustment and sterilization as in Example 1. Then, Inventive Product 4 and Comparative Examples 2-4 were subjected to determination of various components and sensory evaluation as in Example 1.

The results are summarized in Table 2. The tea beverage (Inventive Product 4) which was adjusted to give a furaneol concentration of at least 50 ppb and a caffeine concentration of 200 ppm exhibited reduced heat-deterioration odor, rich umami, and mellow aroma and flavor. In contrast, the tea beverage that contains at least 50 ppb of furaneol but less than 150 ppm of caffeine (Comparative Example 4) was not effectively reduced in heat-deterioration odor.

**[Table 2]**

| | | | | | | | Sensory evaluation | | |
|---|---|---|---|---|---|---|---|---|---|
| | (a) Amino acids (ppm) | (b) Caffeine (ppm) | (c) Furaneol (ppb) | (d) Pyrazines (ppb) | (c)/(d) | Catechins | Umami | Clear sensation | Heat-deteriorati on odor |
| Inventive Product 4 | 40 | 200 | 50 | 2.1 | 23.8 | 300 | 3.0 | 3.6 | 2.5 |
| Comparative Example 2 | 40 | 100 | 20 | 2.1 | 9.5 | 300 | 2.0 | 3.8 | 3.0 |
| Comparative Example 3 | 40 | 200 | 40 | 2.1 | 19.0 | 300 | 2.6 | 3.6 | 4.0 |
| Comparative Example 4 | 40 | 100 | 50 | 70 | 1.6 | 300 | 2.5 | 3.6 | 3.0 |

### Example 3 Tea beverage loaded with a furaneol-containing tea extract

After the raw material tea was subjected to extraction and centrifugation in the same way as in Example 1 to obtain an extract, which was loaded with L-ascorbic acid and sodium hydrogencarbonate, and the pH was adjusted to 6.7. The mixture was loaded with 0.1% of a furaneol-containing tea extract prepared by the following method, and sterilization was performed at 125°C for 7 minutes, whereby the inventive green tea beverage was produced (Inventive Product 5). The obtained green tea beverage was analyzed to determine the furaneol concentration and the contents of amino acids, caffeine and catechins in accordance with the method described in Example 1, and the beverage was subjected to sensory evaluation.

The furaneol-containing tea extract (Brix 8.4; furaneol content: 6 ppm) was prepared by the following method.

Houjicha tea leaves produced by strongly roasting akifuyubancha (coarse green tea picked in autumn) was steam distilled under atmospheric pressure at a SV (space velocity) of 50 h⁻¹ to obtain a distillate. Next, the tea leaves were subjected to extraction, and the obtained extract was treated with activated charcoal. Then, centrifugation and filtration were performed to achieve activated charcoal removal and clarification, followed by concentration under a reduced pressure. The distillate and the concentrate were mixed to obtain an extract, and the extract was heat sterilized at 80°C for 30 seconds to obtain a furaneol-containing tea extract.

The results are summarized in Table 3. The tea beverage produced by adding a furaneol-containing tea extract also benefited from an effect of reducing heat-deterioration odor.

**[Table 3]**

| | | | | | Sensory evaluation | | |
|---|---|---|---|---|---|---|---|
| | (a) Amino acids (ppm) | (b) Caffeine (ppm) | (c) Furaneol (ppb) | Catechins | Umami | Clear sensation | Heat-deterioration odor |
| Inventive Product 5 | 75 | 350 | 50 | 550 | 5.0 | 2.4 | 2.0 |

## Claims

1. A packaged tea beverage produced through heat sterilization, containing:
(a) at least 40 ppm of amino acids,
(b) at least 150 ppm of caffeine, and
(c) at least 50 ppb of 2,5-dimethyl-4-hydroxy-3(2H)-furanone.

2. The tea beverage according to claim 1, further containing (d) pyrazines, wherein proportion of (c) the 2,5-dimethyl-4-hydroxy-3(2H)-furanone to (d) the pyrazines ((c)/(d)) is at least 2.0.

3. The tea beverage according to claim 1 or 2, wherein catechins are contained at not more than 600 ppm.

4. The tea beverage according to any one of claims 1 to 3, wherein (c) the 2,5-dimethyl-4-hydroxy-3(2H)-furanone and/or (d) the pyrazines are/is added as an extract from tea leaves.

5. A process for reducing heat-deterioration odor in a packaged tea beverage containing at least 40 ppm of amino acids and produced through heat sterilization, comprising adjusting the caffeine content in the beverage to at least 150 ppm and the 2,5-dimethyl-4-hydroxy-3(2H)-furanone content in the beverage to at least 50 ppb before the heat sterilization of the beverage.

## Patentansprüche

1. Ein verpacktes Teegetränk, welches durch Hitzesterilisation hergestellt wurde, enthaltend:
(a) mindestens 40 ppm Aminosäuren,
(b) mindestens 150 ppm Koffein und
(c) mindestens 50 ppb 2,5-Dimethyl-4-hydroxy-3(2H)-furanon.

2. Das Teegetränk gemäß Anspruch 1, ferner enthaltend (d) Pyrazine, wobei das Verhältnis von (c) 2,5-Dimethyl-4-hydroxy-3(2H)-furanon zu (d) den Pyrazinen ((c)/(d)) mindestens 2,0 beträgt.

3. Das Teegetränk gemäß Anspruch 1 oder 2, wobei nicht mehr als 600 ppm Catechine enthalten sind.

4. Das Teegetränk gemäß einem der Ansprüche 1 bis 3, wobei (c) 2,5-Dimethyl-4-hydroxy-3(2H)-furanon und/oder (d) die Pyrazine als Extrakt aus Teeblättern hinzugefügt werden/wird.

5. Ein Verfahren zur Reduzierung von wärmeabbauendem Geruch in einem verpackten Teegetränk, welches mindestens 40 ppm Aminosäuren enthält und durch Hitzesterilisation hergestellt wurde, umfassend Einstellen des Koffeingehalts in dem Getränk auf mindestens 150 ppm und des Gehalts an 2,5-Dimethyl-4-hydroxy-3(2H)-furanon in dem Getränk auf mindestens 50 ppb vor der Hitzesterilisation des Getränks.

## Revendications

1. Boisson au thé conditionnée produite par stérilisation à la chaleur, contenant :
(a) au moins 40 ppm d'acides aminés,
(b) au moins 150 ppm de caféine, et
(c) au moins 50 ppb de 2,5-diméthyl-4-hydroxy-3(2H)-furanone.

2. Boisson au thé selon la revendication 1, contenant en outre (d) des pyrazines, dans laquelle le rapport de la 2,5-diméthyl-4-hydroxy-3(2H)-furanone (c) aux pyrazines (d) ((c)/(d)) est d'au moins 2,0.

3. Boisson au thé selon la revendication 1 ou 2, dans laquelle des catéchines sont contenues à raison d'au plus 600 ppm.

4. Boisson au thé selon l'une quelconque des revendications 1 à 3, dans laquelle la 2,5-diméthyl-4-hydroxy-3(2H)-furanone (c) et/ou les pyrazines (d) sont ajoutées sous la forme d'un extrait de feuilles de thé.

5. Procédé pour réduire l'odeur de détérioration à la chaleur dans une boisson au thé conditionnée contenant au moins 40 ppm d'acides aminés et produite par stérilisation à la chaleur, comprenant l'ajustement de la teneur en caféine de la boisson à au moins 150 ppm et la teneur en la 2,5-diméthyl-4-hydroxy-3(2H)-furanone de la boisson à au moins 50 ppb avant la stérilisation à la chaleur de la boisson.
